# EUROPEAN PATENT SPECIFICATION

(11) **EP 2 506 722 B1**
(45) Date of publication and mention of the grant of the patent: **05.03.2014**
(21) Application number: 10782635.6
(22) Date of filing: 02.12.2010
(51) Int. Cl.: A23L 1/236, A23L 2/52, A23G 3/36, A21D 2/14, A61Q 11/00, A23C 9/152

(54) **2-METHOXY-5-(PHENOXYMETHYL)PHENOL**
2-METHOXY-5-(PHENOXYMETHYL)PHENOL
2-METHOXY-5-(PHENOXYMETHYL)PHENOL

(30) Priority: 03.12.2009 US 266315 P
(43) Date of publication of application: 10.10.2012
(73) Proprietor: Givaudan SA, 1214 Vernier (CH)
(72) Inventor: FLAMME, Eric, Cincinnati Ohio 45226 (US); BOM, David, C., Cincinnati Ohio 45252 (US)
(74) Representative: Power, Bridget Claire
(86) International application number: PCT/EP2010/068687
(87) International publication number: WO 2011/067313

(56) References cited:
- DATABASE CA [Online] CHEMICAL ABSTRACTS SERVICE, COLUMBUS, OHIO, US; YAMATO, MASATOSHI ET AL: "Chemical structure and sweet taste of isocoumarins and related compounds", XP8107528, retrieved from STN Database accession no. 91:169228 & CHEMICAL SENSES & FLAVOUR , 4(1), 35-47 CODEN: CSFLA4; ISSN: 0302-2471, 1979,
- DATABASE CA [Online] CHEMICAL ABSTRACTS SERVICE, COLUMBUS, OHIO, US; YAMATO, MASATOSHI ET AL: "Chemical structure and sweet taste of isocoumarin and related compounds. VI", XP9144241, retrieved from STN Database accession no. 84:99154 & CHEMICAL & PHARMACEUTICAL BULLETIN , 23(12), 3101-5 CODEN: CPBTAL; ISSN: 0009-2363, 1975,

## Description

This disclosure relates to 2-methoxy-5-(phenoxymethyl) phenol (hereinafter "compound A") and its use in consumable products to create or modify the flavour thereof.

It is widely recognised that the flavour of consumable products consists of two parts, namely aroma and taste. In general the part that is perceived olfactively in the nasal cavity is described by the term"aroma" , whereas the part termed "taste" is used to describe the sensorial impact perceived in the mouth, and more particularly on the tongue. Sweetness is one of the five generally recognized taste sensations. By modifying taste or aroma of a consumable product, one is modifying its flavour. In particular, by modifying the sweetness of a consumable product, e.g. by enhancing its sweetness, one is modifying its flavour.

In the flavour industry there is a constant demand for compounds that create or modify the flavour of consumable products. Such compounds extend a flavourist's palette and result in greater product diversity for consumers. In particular there is demand for compounds that enhance the sweet-taste of consumable products because such compounds may replace or reduce reliance on conventional sugars the use of which can be undesirable, due to health and wellness concerns such as diabetes and obesity.

It has now been found that compound A may be used in consumable products to create or modify the flavour thereof. In particular it has now been found that compound A is a sweet-taste enhancer and is therefore capable of enhancing the sweetness of a consumable product.

The term "sweet-taste enhancer", as used herein, refers to a compound that, when used in a consumable product comprising at least one other sweet-tasting compound, results in a more than additive increase in the overall sweet taste of the consumable product. In order for a compound to act as a sweet taste enhancer it requires the presence in the composition of at least one sweet-tasting compound.

Provided is method of creating or modifying the flavour of a consumable product by adding thereto compound A.

Also provided is a method of enhancing the sweetness of a consumable product by the addition thereto of compound A, the consumable product containing at least one sweet-tasting compound.

Also provided are consumable products comprising compound A, and in particular such consumable products that contain at least one sweet-tasting compound.

Also provided is the use of compound A in a method hereinabove described.

The term "consumable product" as used herein refers to products that may be placed in the oral cavity and ingested, or that may be placed in the oral cavity before being discarded, for example, mouthwash and chewing gum.

The present methods and products can be understood more readily by reference to the following detailed description of the various embodiments, and to the examples included herein.

Compound A is a known compound that has been described in Japanese patent 51-091,218. However, applicants have found that compound A may be used to create or modify the flavour of consumable compositions. In particular it has been found that compound A acts as a sweet-taste enhancer when added to a consumable product containing at least one sweet-tasting compound.

The discovery of ingredients that can create new flavour accords or modify existing flavour accords is, of course, benefcial. It is particularly beneficial however, if an ingredient possesses the property of sweetness enhancement as this would enable a reduction in the amount of sugar traditionally employed in certain consumable products, particularly foodstuffs and beverages. It has been found that when compound A is employed as a sweet-taste enhancer in consumable products comprising at least one sweet-tasting compound, the total amount of the sweet-tasting compound present in the consumable product may be reduced by 5% to 20%, in some embodiments by 5% to 10%.

Typically sweet-tasting compounds will be present in a consumable product in a concentration from 0.01 % to 99%.

Examples of sweet-tasting compounds include, but are not limited to, fructose, glucose, sucrose, lactose, maltose, saccharin, aspartame, sucralose, neotame, sorbitol, xylitol, Aspartame, AceK, sucralose, maltodextrol, potyols, neohesperidin dihydrochalcone, naringin dihydrochalcone, rebaudioside A, stevioside, mannitol, erithrytol, xylose, rhamnose, Luo Han Guo extract, mogriside V (or lo han kuo extracts), stevia extract, thaumatin, inositol, cyclamate, monatin, and trilobatin.

Compound A may be added to a consumable product In order to create a flavour accord in and of itself. However, more typically, it would be added to a consumable product already containing one or more flavour ingredients and it would be used to modify an existing flavour accord. The compound A can be used to modify all manner of flavour accords. However, it is particularly useful in the modification of accords that include chocolate, coffee, cola, cherry, caramel, and/or fruity flavours including strawberry and/or apricot flavours.

Accordingly, in a particular embodiment, there is provided a method of modifying the flavour of a consumable product comprising the addition of compound A to a consumable product comprising at least one flavour ingredient.

Compound A may be added to consumable products within widely varying amounts depending on the nature of the consumable product, on the effect desired, on the nature and quantity of any other components of the consumable product and on the purpose of adding the compound A to a consumable product.

Flavour modifying amounts of compound A may be about 100 ppm to about 0.01 ppm, in particular embodiments about 50 ppm to about 0.01 ppm, in some particular embodiments about 10 ppm to about 1 ppm of the total consumable product.

Sweet-enhancing amounts of compound A may be about 1 ppm to about 20 ppm, more particularly about 1 ppm to about 10 ppm of the total consumable product.

These proportions are meant to be in no way limiting, and it is possible and permissible for the skilled person to work outside these limits, in order to achieve particular effects.

Compound A can be added to all manner of consumable products.

Examples include, but are not limited to, foodstuffs of all kinds, confectionery products, baked products, sweet products, savory products, dairy products, beverages and oral care products.

Exemplary foodstuffs include, but are not limited to, chilled snacks, sweet and savory snacks, fruit snacks, chipslcrisps, extruded snacks, tortilla/corn chips, popcorn, pretzels, nuts, other sweet and savory snacks, snack bars, granola bars, breakfast bars, energy bars, fruit bars, other snack bars, meal replacement products, slimming products, convalescence drinks, ready meals, canned ready meals, frozen ready meals, dried ready meals, chilled ready meals, dinner mixes, frozen pizza, chilled pizza, soup, canned soup, dehydrated soup, instant soup, chilled soup, uht soup, frozen soup, pasta, canned pasta, dried pasta, chilled/fresh pasta, noodles, plain noodles, instant noodles, cups/bowl instant noodles, pouch instant noodles, chilled noodles, snack noodles, dried food, dessert mixes, sauces, dressings and condiments, herbs and spices, spreads, jams and preserves, honey, chocolate spreads, nut-based spreads, and yeast-based spreads.

Exemplary confectionery products include, but are not limited to, chewing gum (which includes sugarized gum, sugar-free gum, functional gum and bubble gum), centerfill confections, chocolate and other chocolate confectionery, medicated confectionery , lozenges, tablets, pastilles, mints, standard mints, power mints, chewy candies, hard candies, boiled candies, breath and other oral care films or strips, candy canes, lollipops, gummies, jellies, fudge, caramel, hard and soft panned goods, toffee, taffy, liquorice, gelatin candies, gum drops, jelly beans, nougats, fondants, combinations of one or more of the above, and edible flavour compositions incorporating one or more of the above.

Exemplary baked products include, but are not limited to, alfajores, bread, packaged/industrial bread, unpackaged/artisanal bread, pastries, cakes, packaged/industrial cakes, unpackaged/artisanal cakes, cookies, chocolate coated biscuits, sandwich biscuits, filled biscuits, savory biscuits and crackers, and bread substitutes.

Exemplary sweet products include, but are not limited to, breakfast cereals, ready-to-eat ("rte") cereals, family breakfast cereals, flakes, muesli, other ready to eat cereals, children's breakfast cereals, and hot cereals.

Exemplary savory products include, but are not limited to, salty snacks (potato chips, crisps, nuts, tortilla-tostada, pretzels, cheese snacks, com snacks, potato-snacks, ready-to-eat popcorn, microwaveable popcorn, pork rinds, nuts, crackers, cracker snacks, breakfast cereals, meats, aspic, cured meats (ham, bacon), luncheon/breakfast meats (hotdogs, cold cuts, sausage), tomato products, margarine, peanut butter, soup (clear, canned, cream, instant, UHT),canned vegetables, and pasta sauces.

Exemplary dairy products include, but are not limited to, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, dairy products, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavoured, functional and other condensed milk, flavoured milk drinks, dairy only flavoured milk drinks, flavoured milk drinks with fruit juice, soy milk, sour milk drinks, fermented dairy drinks, coffee whiteners, powder milk, flavoured powder milk drinks, cream, yoghurt, plain/natural yoghurt, flavoured yoghurt, fruited yoghurt, probiotic yoghurt, drinking yoghurt, regular drinking yoghurt, probiotic drinking yoghurt, chilled and shelf-stable desserts, dairy-based desserts, and soy-based desserts.

Exemplary beverages include, but are not limited to, flavoured water, soft drinks, fruit drinks, coffee-based drinks, tea-based drinks, juice-based drinks (includes fruit and vegetable), milk-based drinks, gel drinks, carbonated or non-carbonated drinks, powdered drinks, alcoholic or non-alcoholic drinks.

Compound A may be added alone to a consumable product or it may be employed as part of a flavour composition containing other flavour ingredients, off note blocking or masking ingredients that block or mask the off tastes of known sweeteners, and commonly employed excipients, such as solvents and the like. In this manner, compound A may be added to a consumable product as part of a flavour composition. A typical flavour composition will comprise compound A, and one or more ingredients selected from sweet-tasting compounds, sweet-taste enhancers, off note blocking or masking ingredients, flavour ingredients and excipients. The flavour ingredients may be ingredients whose flavour is modified by compound A, or they may be merely part of an overall flavour package.

The flavour composition is useful in the enhancement of the sweetness of a consumable product containing a sweet-tasting compound.

If compound A is employed in a flavour composition for use in a consumable product, it may be employed in said flavour composition in a concentration ranging up to about 99.99%, in particular embodiments from about 0.001% up to about 99.99% by weight of the flavour composition.

Compound A may be added to a flavour composition or a consumable product in neat form, or it may be dissolved in a solvent. It may be vehicularised, for example it may be entrapped with an entrapment material, for example polymers, capsules, microcapsules, nanocapsules, liposomes, precursors, film formers, absorbents, such as for example by using carbon or zeolites, cyclic oligosaccharides and mixtures thereof, or it may be chemically bound to substrates which are adapted to release flavour ingredients upon application of an exogenous stimulus such as light, enzymes, or the like.

Off note blocking or masking ingredients that may be used with compound A, in flavour compositions and consumable products, may be any known off note blocking or masking ingredients known in the art, non limiting examples of which include, chlorogenic acid and 4-(2,2,3-trimethylcyclopentyl) butanoic acid.

Other flavouring ingredients that may be used with compound A, in flavour compositions and consumable products, include, but are not limited to, natural flavours, artificial flavours, spices, seasonings, and the like. Exemplary flavouring ingredients include synthetic flavour oils and flavouring aromatics and/or oils, oleoresins, essences, distillates, and extracts derived from plants, leaves, flowers, fruits, and so forth, and combinations comprising at least one of the foregoing.

Exemplary flavour oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavouring agents include artificial, natural and synthetic fruit flavours such as vanilla, and citrus oils including lemon, orange, lime, grapefruit, yazu, sudachi, and fruit essences including apple, pear, peach, grape, blueberry, strawberry, raspberry, cherry, plum, prune, raisin, cola, guarana, neroli, pineapple, apricot, banana, melon, apricot, ume, cherry, raspberry, blackberry, tropical fruit, mango, mangosteen, pomegranate, papaya and so forth. Additional exemplary flavours imparted by a flavouring agent include a milk flavour, a butter flavour, a cheese flavour, a cream flavour, and a yogurt flavour, a vanilla flavour; tea or coffee flavours, such as a green tea flavour, an oolong tea flavour, a tea flavour, a cocoa flavour, a chocolate flavour, and a coffee flavour; mint flavours, such as a peppermint flavour, a spearmint flavour, and a Japanese mint flavour; spicy flavours, such as an asafetida flavour, an ajowan flavour, an anise flavour, an angelica flavour, a fennel flavour, an allspice flavour, a cinnamon flavour, a chamomile flavour, a mustard flavour, a cardamom flavour, a caraway flavour, a cumin flavour, a clove flavour, a pepper flavour, a coriander flavour, a sassafras flavour, a savory flavour, a Zanthoxyll Fructus flavour, a perilla flavour, a juniper berry flavour, a ginger flavour, a star anise flavour, a horseradish flavour, a thyme flavour, a tarragon flavour, a dill flavour, a capsicum flavour, a nutmeg flavour, a basil flavour, a marjoram flavour, a rosemary flavour, a bayleaf flavour, and a wasabi (Japanese horseradish) flavour, a nut flavour such as an almond flavour, a hazelnut flavour, a macadamia nut flavour, a peanut flavour, a pecan flavour, a pistachio flavour, and a walnut flavour; alcoholic flavours, such as a wine flavour, a whisky flavour, a brandy flavour, a rum flavour, a gin flavour, and a liqueur flavour; floral flavours; and vegetable flavours, such as an onion flavour, a garlic flavour, a cabbage flavour, a carrot flavour, a celery flavour, mushroom, flavour, and a tomato flavour.

In some embodiments, said other flavourant ingredients include aldehydes and esters such as cinnamyl acetate, cinnamaldehyde, citral diethylacetal, dihydrocarvyl acetate, eugenyl 49 formate, p-methylamisol, and so forth can be used. Further examples of aldehyde flavourings include acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C- 12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), and the like.

Further examples of other flavouring ingredients can be found in "Chemicals Used in Food Processing", publication 1274, pages 63-258, 1965, by the National Academy of Sciences, incorporated herein by reference.

The flavour compositions and consumable products may also include one or more ingredients or excipients conventionally used in such flavour compositions or consumable products, for example carrier materials and other auxiliary agents commonly used in the art. Suitable excipients for flavour compositions are well known in the art and include, for example, without limitation, solvents (including water, alcohol, ethanol, oils, fats, vegetable oil, and miglyol), binders, diluents, disintegrants, lubricants, flavouring agents, coloring agents, preservatives, antioxidants, emulsifiers, stabilisers, flavour-enhancers, anti-caking agents, and the like.

Examples of such carriers or diluents for flavour compositions and consumable products may be found in for example, "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J.M. Nikitakis (ed.), 1st ed., The Cosmetic, Toiletry and Fragrance Association, Inc., Washington, 1988.

Other suitable and desirable ingredients of flavour compositions and consumable products are described in standard texts, such as "Handbook of Industrial Chemical Additives", ed. M. and I. Ash, 2nd Ed., (Synapse 2000).

Compound A (CAS No. 58451-96-0) is a known compound and can be synthesised according to methods known in the art. A synthesis method is disclosed in Yamato, Masatoshi; Hashigaki, Kuniko; Uenishi, Junichi; Yamakawa, Ikuko; Sato, Noriko; Koyama, Takaji. Chemical structure and sweet taste of isocoumarin and related compounds. VI. Chemical & Pharmaceutical Bulletin (1975), 23(12), 3101-5. CODEN: CPBTAL ISSN:0009-2363. CAN 84:99154 AN 1976:99154 CAPLUS. This document is incorporated herein by reference.

There now follows a series of non-limiting examples that serve to illustrate the present methods and products.

### Example 1: Taste evaluation of compound A

A 1% solution of compound A was prepared in ethanol.
This 1% solution was then further diluted, using water, to create a 10 ppm solution.

A panel of trained experts was then asked to evaluate the taste of this sample solution and to comment on any flavor attributes.

The sample was found to have the following flavour attributes:
Sweet upfront, spicy, phenolic, eugenol.

### Example 2: Isointensity Measurement of 2-methoxy-5-(phenoxymethyl)phenol

A 1% solution of compound A was prepared in ethanol.

This 1% solution was then further diluted, using water, to create a 5ppm sample solution of compound A.

To determine the isointensity of this solution a panel of trained experts was then asked to evaluate the taste (in particular the sweet taste) of this sample solution in comparison to 0.5%, 1 % and 1.5% sample sucrose solutions.

Panel testing was carried out in the following way:
Twenty millilitres of each of the samples was presented blind and in counter balanced order following a William's Latin square design, to 20 sweet sensitive panelists.

In two replications (over 1 session), panelists were asked to taste and rank the solutions from least sweet to most sweet.

The R-index statistics were then calculated between the 5ppm 2-methoxy-5-(phenoxymethyl)phenol sample solution, and each of the sample sucrose solutions (0.5%, 1%, and 1.5%) to determine if they were significantly different from each other.

Samples were deemed significantly different if p<0.05 between the calculated R-index values and the critical value range of 35% to 65%.

An R-index significantly greater than the critical value range means that the compound A sample solution is significantly less sweet than the sucrose sample. An R-index significantly below the lower critical value range indicates that the compound A sample solution is significantly sweeter than the sucrose sample.

Results are detailed in Table 1.

**Table 1: Isointensity data for 5 ppm compound A sample solution.**

| Solutions compared | R-index | Critical Value Range | Significantly different (p<0.05) | Experimental Compound Sweetness |
|---|---|---|---|---|
| 5 ppm compound A vs. 0.5% sucrose | 45.5 | 35.0% to 65.0% | No | Iso-sweet |
| 5 ppm compound A vs. 1.0% sucrose | 82.9 | 35.0% to 65.0% | Yes | Less sweet |
| 5 ppm compound A vs. 1.5% sucrose | 96.7 | 35.0% to 65.0% | Yes | Less sweet |

Based on these results it was determined that the 5 ppm compound A sample solution was perceived to be iso-sweet to the 0.5% sucrose sample solution, and was perceived to be significantly less sweet than the 1.0% and 1.5% sucrose sample solutions (the calculated R-index values exceeding the critical values at p<0.05).

### Example 3: Sweet taste enhancement of in sugar water by compound A

A 1% ethanol solution of compound A was added into a 7% sucrose water solution. This resulted in a 7% sucrose water sample solution containing 5 ppm of compound A.

To determine its isointensity a panel of trained experts was then asked to evaluate the taste (in particular the sweet taste) of this sample solution in comparison to sample water solutions containing 7%, 8%, 9% and 10% sucrose but not compound A.

Panel testing was carried out in the following way:
Twenty millilitres of each of the sample solutions was presented blind and in random order to 20 sweet sensitive panelists.

In two replications (over 1 session), panelists were asked to rank the solutions from least sweet to most sweet.

The data was then subjected to an R-index analysis as described in example 4.

Results are detailed in Table II.

**Table II: Sweet enhancement of 5 ppm compound A in sugar water.**

| Solutions compared | R-index | Critical Value Range | Significantly different (p<0.05) | Experimental Compound Sweetness |
|---|---|---|---|---|
| 7% sucrose + 5 ppm compound A vs. 7% sucrose | 29.2 | 35.0% to 65.0% | Yes | More sweet |
| 7% sucrose + 5 ppm compound A vs. 8% sucrose | 17.5 | 35.0% to 65.0% | Yes | More sweet |
| 7% sucrose + 5 ppm compound A vs. 9% sucrose | 56.9 | 35.0% to 65.0% | No | Iso sweet |
| 7% sucrose + 5 ppm compound A vs. 10% sucrose | 83.9 | 35.0% to 65.0% | Yes | Less sweet |

Based on these results it was determined that the 7% sucrose + 5 ppm of compound A solution was perceived to be significantly more sweet than 8% sucrose, significantly less sweet than 10% sucrose, and isosweet to 9% sucrose.

Consequently it may be concluded that compound A is behaving as a sweet flavour enhancer.

### Example 4: Taste_evaluation of flavours comprising compound A

A 1% ethanol solution of compound A was added into a cola flavoured solution. This resulted in a cola solution containing 5 ppm of compound A.

A panel of trained experts was then asked to evaluate the flavour of this sample cola solution against a cola solution not containing compound A, and to comment on any perceived flavour attribute differences.

The experiment was then repeated for cherry and caramel flavoured solutions.

Results are detailed in Table III.

**Table III**

| Sample | Comments |
|---|---|
| Cola + 5 ppm compound A vs Cola flavoured solution | More musty cinnamon flavour was increased |
| Cherry + 5 ppm of compound A vs Cherry flavoured solution | More spicy benzaldehyde like flavour |
| Caramel + 5 ppm of compound A vs Caramel flavoured solution | Less creamy more spicy and toffee flavoured |

## Claims

1. A method of enhancing the sweetness of a consumable product containing at least one sweet-tasting compound by adding thereto 2-methoxy-5-(phenoxymethyl)phenol.

2. A method according to claim 1 wherein the at least one sweet-tasting compound is selected from the group consisting of sucrose, fructose, glucose, maltose, lactose, sucralose, AceK, Aspartame, Neotame, rebaudioside A, stevia extract, neohesperidine dihydrochalcone, naringin dihydrochalcone, trilobatin, cyclamate, saccharin, sorbitol, xylitol, maltodextrol, polyols, stevioside, mannitol, xylose, rhamnose, thaumatin, inositol, monatin, Luo Han Guo extract, mogroside V, lo han kuo extracts, erythritol and combinations thereof.

3. A method according to any of the preceding claims wherein the consumable product is selected from the group consisting of foodstuffs, confectionary products, baked products, sweet products, savoury products, dairy products, beverages and oral care products.

4. A method according to any of the preceding claims wherein the consumable product contains at least one flavour ingredient in addition to 2-methoxy-5-(phenoxymethyl) phenol.

5. A method according to claim 4 wherein the at least one flavour ingredient forms an accord of cherry, cola or caramel.

6. A method according to any of the preceding claims wherein 2-methoxy-5-(phenoxymethyl)phenol is present in the consumable product in amounts of about 0.01 ppm to about 1 00ppm

7. A method of enhancing the sweetness of a consumable product according to any of the preceding claims wherein 2-methoxy-5-(phenoxymethyl)phenol is present in the consumable product in amounts of about 1ppm to about 10ppm.

8. A method according to any of the claims 1 to 7 wherein the sweet-tasting compound is present in the consumable product in a concentration from about 0 01% to about 99%.

9. A consumable product comprising 2-methoxy-5-(phenoxymethyl)phenol and at least one sweet-tasting compound.

10. The consumable product according to claim 9 wherein the at least one sweet-tasting compound is selected from the group consisting of sucrose, fructose, glucose, maltose lactose, sucralose, AceK, Aspartame, Neotame, rebaudioside A, stevia extract, neohesperidine dihydrochalcone, naringin dihydrochalcone, trilobatin, monatin, cyclamate, saccharin, sorbitol, xylitol, maltodextrol, polyols, stevioside, mannitol, xylose, rhamnose, thaumatin, inositol, Luo Han Guo extract, mogroside V, lo han kuo extracts, erythritol and combinations thereof.

11. The consumable product according to any of claims 9 to 10 wherein the consumable product is selected from the group consisting of foodstuffs, confectionary products, baked products, sweet products, savoury products, dairy products, beverages and oral care products.

12. The consumable product according to any of claim 9 to 11 wherein the consumable product contains at least one flavour ingredient in addition to 2-methoxy-5-(phenoxymethyl)phenol.

13. The consumable product according to any of claims 9 to 12 wherein the at least one flavour ingredient forms an accord of cherry, cola or caramel.

14. The consumable product according to any of claims 9 to 13 wherein 2-methoxy-5-(phenoxymethyl)phenol is present in the consumable product in amounts of about 0.01 ppm to about 100ppm.

15. The consumable product according to any of claims 9 to 14 wherein 2-methoxy-5-(phenoxymethyl)phenol is present in the consumable product in amounts of about 1ppm to about 10ppm.

## Patentansprüche

1. Verfahren zum Verstärken der Süße eines Verzehrprodukts, das mindestens eine süßschmeckende Verbindung enthält, durch Versetzen mit 2-Methoxy-5-(phenoxymethyl)phenol.

2. Verfahren nach Anspruch 1, wobei die mindestens eine süßschmeckende Verbindung aus der Gruppe bestehend aus Saccharose, Fructose, Glucose, Maltose, Lactose, Sucralose, AceK, Aspartam, Neotam, Rebaudiosid A, Stevia-Extrakt, Neohesperidin-Dihydrochalcon, Naringin-Dihydrochalcon, Trilobatin, Cyclamat, Saccharin, Sorbit, Xylit, Maltodextrol, Polyolen, Steviosid, Mannit, Xylose, Rhamnose, Thaumatin, Inosit, Monatin, Luo-Han-Guo-Extrakt, Mogrosid V, Lo-Han-Kuo-Extrakten, Erythrit und Kombinationen davon ausgewählt ist.

3. Verfahren nach einem der vorhergehenden Ansprüche, wobei das Verzehrprodukt aus der Gruppe bestehend aus Nahrungsmitteln, Konfekt, Backwaren, Süßwaren, pikanten Produkten, Milchprodukten, Getränken und Mundpflegeprodukten ausgewählt ist.

4. Verfahren nach einem der vorhergehenden Ansprüche, wobei das Verzehrprodukt zusätzlich zu 2-Methoxy-5-(phenoxymethyl)phenol noch mindestens einen Geschmacksbestandteil enthält.

5. Verfahren nach Anspruch 4, wobei der mindestens eine Geschmacksbestandteil eine Kirsch-, Cola-oder Karamellnote bildet.

6. Verfahren nach einem der vorhergehenden Ansprüche, wobei 2-Methoxy-5-(phenoxymethyl)phenol in dem Verzehrprodukt in Mengen von ungefähr 0,01 ppm bis ungefähr 100 ppm vorliegt.

7. Verfahren zum Verstärken der Süße eines Verzehrprodukts nach einem der vorhergehenden Ansprüche, wobei 2-Methoxy-5-(phenoxymethyl)phenol in dem Verzehrprodukt in Mengen von ungefähr 1 ppm bis ungefähr 10 ppm vorliegt.

8. Verfahren nach einem der Ansprüche 1 bis 7, wobei die süßschmeckende Verbindung in dem Verzehrprodukt in einer Konzentration von ungefähr 0,01% bis ungefähr 99% vorliegt.

9. Verzehrprodukt, umfassend 2-Methoxy-5-(phenoxymethyl)phenol und mindestens eine süßschmeckende Verbindung.

10. Verzehrprodukt nach Anspruch 9, wobei die mindestens eine süßschmeckende Verbindung aus der Gruppe bestehend aus Saccharose, Fructose, Glucose, Maltose, Lactose, Sucralose, AceK, Aspartam, Neotam, Rebaudiosid A, Stevia-Extrakt, Neohesperidin-Dihydrochalcon, Naringin-Dihydrochalcon, Trilobatin, Monatin, Cyclamat, Saccharin, Sorbit, Xylit, Maltodextrol, Polyolen, Steviosid, Mannit, Xylose, Rhamnose, Thaumatin, Inosit, Luo-Han-Guo-Extrakt, Mogrosid V, Lo-Han-Kuo-Extrakten, Erythrit und Kombinationen davon ausgewählt ist.

11. Verzehrprodukt nach einem der Ansprüche 9 bis 10, wobei das Verzehrprodukt aus der Gruppe bestehend aus Nahrungsmitteln, Konfekt, Backwaren, Süßwaren, pikanten Produkten, Milchprodukten, Getränken und Mundpflegeprodukten ausgewählt ist.

12. Verzehrprodukt nach einem der Ansprüche 9 bis 11, wobei das Verzehrprodukt zusätzlich zu 2-Methoxy-5-(phenoxymethyl)phenol noch mindestens einen Geschmacksbestandteil enthält.

13. Verzehrprodukt nach einem der Ansprüche 9 bis 12, wobei der mindestens eine Geschmacksbestandteil eine Kirsch-, Cola- oder Karamellnote bildet.

14. Verzehrprodukt nach einem der Ansprüche 9 bis 13, wobei 2-Methoxy-5-(phenoxymethyl)phenol in dem Verzehrprodukt in Mengen von ungefähr 0,01 ppm bis ungefähr 100 ppm vorliegt.

15. Verzehrprodukt nach einem der Ansprüche 9 bis 14, wobei 2-Methoxy-5-(phenoxymethyl)phenol in dem Verzehrprodukt in Mengen von ungefähr 1 ppm bis ungefähr 10 ppm vorliegt.

## Revendications

1. Méthode d'amélioration de la sucrosité d'un produit consommable contenant au moins un composé à goût sucré, en y ajoutant du 2-méthoxy-5-(phénoxyméthyl)phénol.

2. Méthode selon la revendication 1, dans laquelle le au moins un composé à goût sucré est choisi dans le groupe constitué par le saccharose, le fructose, le glucose, le maltose, le lactose, le sucralose, l'Acésulfame K, l'Aspartame, le Néotame, le rébaudioside A, l'extrait de Stévia, la néohespéridine dihydrochalcone, la naringine dihydrochalcone, la trilobatine, le cyclamate, la saccharine, le sorbitol, le xylitol, les maltodextrines, les polyols, le stévioside, le mannitol, le xylose, le rhamnose, la thaumatine, l'inositol, la monatine, l'extrait de Luo Han Guo, le mogroside V, les extraits de Lo Han Kuo, l'érythritol, et des combinaisons de ceux-ci.

3. Méthode selon l'une quelconque des revendications précédentes, dans laquelle le produit consommable est choisi dans le groupe constitué par les produits alimentaires, les produits de confiserie, les produits de boulangerie, les produits sucrés, les produits salés, les produits laitiers, les boissons et les produits de soin buccal.

4. Méthode selon l'une quelconque des revendications précédentes, dans laquelle le produit consommable contient au moins un ingrédient aromatisant outre le 2-méthoxy-5-(phénoxyméthyl)phénol.

5. Méthode selon la revendication 4, dans lequel le au moins un ingrédient aromatisant forme un accord de cerise, cola ou caramel.

6. Méthode selon l'une quelconque des revendications précédentes, dans laquelle le 2-méthoxy-5-(phénoxyméthyl)phénol est présent dans le produit consommable selon des quantités allant d'environ 0,01 ppm à environ 100 ppm.

7. Méthode d'amélioration de la sucrosité d'un produit consommable selon l'une quelconque des revendications précédentes, dans laquelle le 2-méthoxy-5-(phénoxyméthyl)phénol est présent dans le produit consommable selon des quantités allant d'environ 1 ppm à environ 10 ppm.

8. Méthode selon l'une quelconque des revendications 1 à 7, dans laquelle le composé à goût sucré est présent dans le produit consommable selon une concentration allant d'environ 0,01% à environ 99%.

9. Produit consommable comprenant du 2-méthoxy-5-(phénoxyméthyl)phénol et au moins un composé à goût sucré.

10. Produit consommable selon la revendication 9, dans lequel le au moins un composé à goût sucré est choisi dans le groupe constitué par le saccharose, le fructose, le glucose, le maltose, le lactose, le sucralose, l'Acésulfame K, l'Aspartame, le Néotame, le rébaudioside A, l'extrait de Stévia, la néohespéridine dihydrochalcone, la naringine dihydrochalcone, la trilobatine, la monatine, le cyclamate, la saccharine, le sorbitol, le xylitol, les maltodextrines, les polyols, le stévioside, le mannitol, le xylose, le rhamnose, la thaumatine, l'inositol, la monatine, l'extrait de Luo Han Guo, le mogroside V, les extraits de Lo Han Kuo, l'érythritol, et des combinaisons de ceux-ci.

11. Produit consommable selon l'une quelconque des revendications 9 à 10, dans lequel le produit consommable est choisi dans le groupe constitué par les produits alimentaires, les produits de confiserie, les produits de boulangerie, les produits sucrés, les produits salés, les produits laitiers, les boissons et les produits de soin buccal.

12. Produit consommable selon l'une quelconque des revendications 9 à 11, dans lequel le produit consommable contient au moins un ingrédient aromatisant outre le 2-méthoxy-5-(phénoxyméthyl)phénol.

13. Produit consommable selon l'une quelconque des revendications 9 à 12, dans lequel le au moins un ingrédient aromatisant forme un accord de cerise, cola ou caramel.

14. Produit consommable selon l'une quelconque des revendications 9 à 13, dans lequel le 2-méthoxy-5-(phénoxyméthyl)phénol est présent dans le produit consommable selon des quantités allant d'environ 0,01 ppm à environ 100 ppm.

15. Produit consommable selon l'une quelconque des revendications 9 à 14, dans lequel le 2-méthoxy-5-(phénoxyméthyl)phénol est présent dans le produit consommable selon des quantités allant d'environ 1 ppm à environ 10 ppm.
